# EUROPÄISCHE PATENTANMELDUNG

(11) **EP 3 869 119 A1**
(43) Veröffentlichungstag der Anmeldung: **25.08.2021**
(21) Anmeldenummer: 21158187.1
(22) Anmeldetag: 19.02.2021
(51) Int. Cl.: F24S 20/40, H02S 40/44, F24S 20/00

(54) **SOLARANORDNUNG MIT EINER PHOTOVOLTAIKEINHEIT**

(30) Priorität: 20.02.2020 DE 102020104542
(71) Anmelder: Pauly, Karsten, 26160 Bad Zwischenahn (DE); Pauly, Monika, 26160 Bad Zwischenahn (DE)
(72) Erfinder: Pauly, Karsten, 26160 Bad Zwischenahn (DE); Pauly, Monika, 26160 Bad Zwischenahn (DE)
(74) Vertreter: Kleine, Hubertus

(57) **Zusammenfassung**

Die Erfindung betrifft eine Solaranordnung (1) mit einer Photovoltaikeinheit (2) mit Photovoltaikzellen, deren Ausrichtung mit Hilfe einer Verstellvorrichtung verstellbar ist. Die Photovoltaikeinheit (2) weist eine Mehrzahl von Photovoltaiklamellen (20) auf, die parallel zueinander angeordnet und schwenkbar gelagert sind. Die Solaranordnung (1) zeichnet sich dadurch aus, dass die Photovoltaikeinheit (2) parallel zu und über einer Solareinheit angeordnet ist.

## Beschreibung

Die Erfindung betrifft eine Solaranordnung mit einer Photovoltaikeinheit, nachfolgend auch PV-Einheit genannt, die Photovoltaikzellen aufweist, deren Ausrichtung mit Hilfe einer Verstellvorrichtung verstellbar ist, um die Photovoltaikeinheit an Umgebungsbedingungen anpassen zu können. Die Photovoltaikeinheit weist dabei eine Mehrzahl von Photovoltaiklamellen auf, die parallel zueinander angeordnet und schwenkbar gelagert sind.

Zur Anpassung einer Ausrichtung von Photovoltaikzellen, nachfolgend als PV-Zellen abgekürzt, an eine sich im Tagesverlauf und/oder auch im Jahresverlauf ändernden Einstrahlungsrichtung der Sonne auf die Erdoberfläche sind sogenannte Nachführeinrichtungen bekannt. Nachführeinrichtungen weisen eine Verstellvorrichtung auf, um eine Neigung der Solarzellen gegenüber der Erdoberfläche in Abhängigkeit des Sonnenstands oder anderer Umgebungsbedingungen zu verändern. Bekannt ist dazu der Einsatz von Schwenkpanelen, die elektromotorisch, pneumatisch oder hydraulisch angetrieben in eine oder auch zwei Raumrichtungen verschwenkt werden können.

Um den Mehraufwand an Material und Kosten, den die Nachführeinrichtung bedingt, bezogen auf die Leistung der PV-Einheit gering zu halten, werden in der Regel großflächige Paneele verschwenkt. Typische Solarmodule, in denen eine Mehrzahl von Zellen zusammengefasst sind, haben Abmessungen von etwa 1 Meter (m) x 1,70 m. Schwenkpaneele, die von Nachführeinrichtungen bewegt werden, sind in der Regel für ein oder mehrere solcher Module ausgelegt. Bedingt durch diese Größe eignen sich bekannte Nachführeinrichtungen für Freiflächenanlagen oder für den Einsatz auf großen Flachdächern, wie beispielsweise bei Industrieanlagen. Ein Einsatz auf kleineren Dachflächen und insbesondere auf Schrägdachflächen von Wohnhäusern oder kleineren Gewerbebauten ist mit Nachführanlagen dieser Dimensionierung weder technisch noch im Hinblick auf den optischen Eindruck sinnvoll.

Aus den Druckschriften CN 1766273 A und CN 1873157 A sind Solaranordnungen der oben genannten Art bekannt, bei denen sich die PV-Zellen der PV-Einheit auf einer Mehrzahl von länglichen Lamellen angeordnet sind, die um ihre Längsachse drehbar gelagert sind. Die Lamellen können mechanisch einfach um ihre Drehachse geschwenkt werden, so dass ein Nachführen auch bei kleinen Anlagen und insbesondere Dachanlagen möglich wird.

Die Druckschrift US 4,137,098 zeigt eine ähnliche Lamellenanordnung, die zwischen zwei Glasscheiben eines Fensters angeordnet ist. In einer Ausgestaltung kann Luft um die PV-Zellen strömen, um sie zu kühlen und die Warmluft zu nutzen. Die äußere Glasscheibe führt allerdings zu Reflexions- und Brechungsverlusten, insbesondere bei schräg auf die Glasscheibe auftreffender Sonneneinstrahlung. Zudem ist der Ertrag an thermischer Sonnenenergie relativ gering und steigt in etwa parallel zu dem elektrischen Ertrag. Es ist nicht möglich, den Ertrag gezielt auf die thermische oder photovoltaische Nutzung zu verteilen.

Es ist daher eine Aufgabe der vorliegenden Erfindung, eine Solaranordnung mit photovoltaischer und weiterer, z.B. thermischer Nutzung der Solarenergie zu schaffen, die die Vorteile einer Nachführeinrichtung auch für kleinere PV-Einheiten, die beispielsweise auf Schrägdachflächen montiert werden, bereitstellt und die eine möglichst gute Kontrolle zwischen den beiden Nutzungsarten bietet.

Diese Aufgabe wird durch eine Solaranordnung mit den Merkmalen des unabhängigen Anspruchs gelöst. Vorteilhafte Ausgestaltungen und Weiterbildungen sind Gegenstand der abhängigen Ansprüche.

Eine erfindungsgemäße Solaranordnung weist eine derartige Photovoltaikeinheit auf, die parallel zu und über einer Solareinheit angeordnet ist. Die Solareinheit kann zur weiteren Nutzung weitere PV-Zellen und/oder auch eine einen Absorber umfassende Solarthermieeinheit aufweisen. Die Solareinheit nutzt dabei die Solarenergie, die durch die Stellung der Lamellen von der der PV-Einheit nicht aufgenommen wird, entweder, indem die Sonnenstrahlung an den Lamellen vorbei strahlt und auf die nachgeordnete Solareinheit trifft, oder indem die Sonnenstrahlung von den Lamellen bei entsprechender Ausrichtung auf die nachgeordnete Solareinheit reflektiert wird.

Die Schwenkbarkeit ermöglicht ein Nachführen der PV-Lamellen mit dem Sonnenstand, so dass ein größtmöglicher Ertrag erzielt werden kann. Durch das Nachführen wird Einstrahlung auch in den Tagesrandstunden und bei diffusem Licht effektiv in Strom umgesetzt. Gleichzeitig sind die PV-Lamellen nebeneinander angeordnet und bevorzugt flächig mit einer rechteckigen Grundfläche ausgebildet, wobei eine Länge einer Längsseite der Photovoltaiklamellen die einer Querseite um ein Mehrfaches übersteigt. Derartige PV-Lamellen können mechanisch einfach um eine Drehachse geschwenkt werden, die parallel zur Längsseite der PV-Lamellen verläuft, so dass ein Nachführen auch bei kleinen Anlagen und insbesondere Dachanlagen möglich wird.

Die Kombination der PV-Einheit und der Solarthermieeinheit ermöglicht es, auf einer begrenzten Fläche Sonnenstrahlung sowohl photovoltaisch als auch thermisch nutzen zu können, wobei die Ausrichtung der PV-Lamellen eine Kontrolle über die Art der Nutzung (photovoltaisch gegenüber thermisch) ermöglicht. Beispielsweise kann Sonneneinstrahlung gezielt verstärkt in Strom umgewandelt werden und damit gleichzeitig eine übermäßige und gar problematische Bestrahlung der Solarthermieeinheit unterbunden werden. Dadurch, dass eine Überhitzung der Solarthermieeinheit auf diese Weise verhindert werden kann, kann vorteilhaft die zurzeit übliche Begrenzung der Absorberfläche von Solarthermieeinheiten, die nach dem jetzigen Stand der Technik gegeben ist, entfallen. Durch die Lamellenabschattung können Absorberflächen bzw. Wärmetauscher der Solarthermieeinheit ggf. so groß dimensioniert werden, dass ein Energiebedarf zu Heizzwecken selbst im Winter ohne oder annähernd ohne fossile Zusatzheizung abgedeckt werden kann.

Wird eine verstärkte Bestrahlung der Solarthermieeinheit gewünscht, beispielsweise weil Brauchwasser nachgeheizt werden soll, können die PV-Lamellen mit ihrer Schmalfläche in Richtung einer einfallenden Strahlung gedreht werden, so dass die Strahlung nahezu vollständig auf die Solarthermieeinheit auftrifft. Die Verstellbarkeit der PV-Lamellen durch das Verschwenken bietet so eine große Variabilität und Flexibilität zur effizienten Ausnutzung und situationsbezogenen Verteilung der einfallenden Strahlung auf die PV-Einheit bzw. die Solarthermieeinheit.

In einer vorteilhaften Ausgestaltung der Solaranordnung weist die Solareinheit einen Verdampfer und/oder einen Kondensator auf und ist Teil eines Wärmepumpenkreislaufs. Dadurch wird ein besonders hoher Wirkungsgrad erzielt.

In einer weiteren vorteilhaften Ausgestaltung der Solaranordnung dienen Anschlussrohre der Solarthermieeinheit zur Ableitung eines von der Photovoltaikeinheit erzeugten Stroms und/oder von Steuersignalen. So können üblicherweise vorhandene und in der Regel wärmeisolierte (und damit auch elektrisch isolierte) Anschlussrohre, z.B. Kupferrohre, an die die Solarthermieeinheit angeschlossen ist, vorteilhaft zur Übertragung von Strom und/oder Steuersignalen eingesetzt werden. Dieses ist insbesondere bei nachgerüsteten PV-Einheiten von Vorteil, da eine andernfalls z.B. vom Dach in den Keller zu verlegende Verkabelung entfällt.

In einer vorteilhaften Ausgestaltung der Solaranordnung weist die PV-Einheit einen Rahmen auf, der aus mindestens zwei Längsträgern und mindestens zwei Querträgern gebildet ist, wobei die PV-Lamellen in den Längsträgern schwenkbar gelagert sind. In einem solchen Rahmen kann eine Mehrzahl von PV-Lamellen angeordnet werden und es kann ein Verstellmechanismus vorgesehen sein, der auf alle PV-Lamellen wirkt, was den Aufwand für den Verstellmechanismus insgesamt verkleinert. Beispielsweise können an den Drehachsen Zahnräder angeordnet sein, über die die PV-Lamellen verschwenkt werden. Die Zahnräder können dabei in eine Hohlkammer eintauchen, die in dem mindestens einen Längsträger ausgebildet ist. Eine synchrone Drehbewegung kann über eine Zahnstange erfolgen, die in der Hohlkammer verläuft und in die die Zahnräder eingreifen. Alternativ kann auch ein Zahnriemen oder eine Kette eingesetzt werden. Zum Verstellen kann vorteilhaft eine Antriebseinheit mit einem Antriebsmotor mit Getriebe und einem Abtriebszahnrad eingesetzt werden, das ebenfalls in die Zahnstange (bzw. den Zahnriemen oder die Kette) eingreift.

Eine derartige Anordnung kann auf jeder der Seiten der PV-Lamellen ausgebildet sein. In einer weiteren vorteilhaften Ausgestaltung werden die PV-Lamellen über die Zahnräder und die jeweilige Zahnstange elektrisch kontaktiert sind. Bevorzugt sind dabei die Längsträger aus Kunststoff gefertigt, um Berührungen oder ungewünschten Kontaktierungen der mit elektrischem Potential beaufschlagten Elemente vorzubeugen.

In einer weiteren vorteilhaften Ausgestaltung der Solaranordnung weisen die PV-Lamellen der Photovoltaikeinheit Dünnschicht-Solarmodule auf oder sind bis auf einen Anschlussbereich von den Dünnschicht-Solarmodulen gebildet.

Weiter vorteilhaft können photovoltaisch aktive Oberflächen der PV-Lamellen mit einer Antireflexionsstruktur versehen sein. Durch die Antireflexionsstruktur kann die Fähigkeit, Einstrahlung auch in den Tagesrandstunden und bei diffusem Licht effektiv in Strom umzusetzen, zusätzlich zur Verschwenkbarkeit der PV-Lamellen erhöht werden.

In einer weiteren vorteilhaften Ausgestaltung der Solaranordnung weist die Photovoltaikeinheit eine Lüftungsvorrichtung auf, um die PV-Lamellen einem Luftstrom auszusetzen. Je nach Betriebssituation kann der Luftstrom zum Kühlen der PV-Lamellen verwendet werden, um die Effizienz der PV-Lamellen zu steigern. In Verbindung mit einem optionalen Heizelement kann der Luftstrom auch zum Entfernen bzw. Abtauen von Reif, Eis oder Schnee eingesetzt werden.

Die Erfindung wird nachfolgend anhand von Ausführungsbeispielen mit Hilfe von Figuren näher erläutert. Die Figuren zeigen:
- Fig. 1a - 1d: ein erstes Ausführungsbeispiel einer Solaranordnung mit einer PV-Einheit in jeweils einer schematischen Schnittdarstellung in verschiedenen Betriebszuständen;
- Fig. 2: ein Beispiel einer PV-Einheit in einer schematischen Schnittdarstellung;
- Fig. 3, 4: jeweils ein weiteres Ausführungsbeispiel einer Solaranordnung in einer schematischen Schnittdarstellung; und
- Fig. 5 - 7: verschiedene isometrische Darstellungen von Teilen eines weiteren Beispiels einer PV-Einheit.

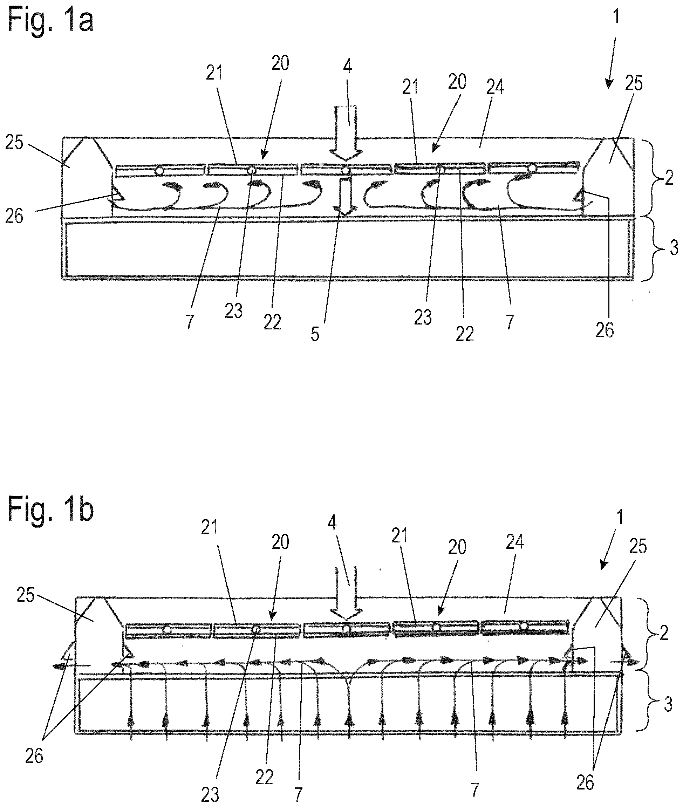

In den Figuren 1a bis 1d ist ein erstes Ausführungsbeispiel einer Solaranordnung 1 in jeweils einer schematischen Schnittdarstellung gezeigt. In diesen wie allen weiteren Figuren beziehen sich gleiche Bezugszeichen jeweils auf gleiche oder gleich wirkende Elemente. Aus Gründen der Übersichtlichkeit ist nicht in allen Figuren jede Komponente mit einem Bezugszeichen versehen.

Bei der Solaranordnung 1 ist eine PV-Einheit 2 auf eine Solarthermieeinheit 3 aufgesetzt. Die Anordnung beider zusammen bildet die modulartige Solaranordnung 1. Abmessungen der Solaranordnung 1 können im Bereich von einigen Dezimetern bis etwa einem Meter in der Breite und etwa einem bis mehreren Metern in der Länge liegen. Die Länge ist die in den Figuren 1a-d dargestellte Ausdehnung vom linken bis zum rechten Figurenrand. Diese Ausdehnungsrichtung wird nachfolgend auch als Längsrichtung bezeichnet. Die Breite ist die Ausdehnung in einer Richtung senkrecht zur gezeigten Schnittebene. Diese Richtung wird nachfolgend auch als Querrichtung der Solaranordnung 1 bezeichnet.

Die Solarthermieeinheit 3 ist in den Figuren 1a-d nicht detaillierter dargestellt. Sie kann beispielsweise in Form eines thermischen Solarkollektors ausgeführt sein, bei dem eine Flüssigkeit, insbesondere Wasser, durch ein Rohrsystem oder durch einen Flächenhohlraum geleitet wird, das als Absorber dient. Von der Sonnenstrahlung aufgenommene Wärme wird an die Flüssigkeit übertragen und von dieser einer weiteren Nutzung zugeführt. Dabei kann ein Wärmetransport durch die Wärmekapazität der Flüssigkeit erfolgen. Bei Verwendung von röhrenförmigen Absorbern kann ein hoher Ertrag erreicht werden, indem die Rohre ohne Zwischenräume, also Stoß an Stoß, angeordnet werden. Durch den Lamellenreflektor kann bei geeigneter Stellung das Sonnenlicht in Form einer Brennlinie auf die Rohre fokussiert werden, ohne dass eine gegenseitige Schattenbildung auftritt.

In alternativen Ausgestaltungen kann die Solarthermieeinheit 3 auch einen Verdampfer oder auch einen Kondensator eines Wärmepumpenkreislaufs aufweisen, um Wärme besonders effektiv aufnehmen und einer Nutzung zuführen zu können oder umgekehrt auch Wärme abführen zu können, wenn der Wärmepumpenkreislauf zu Kühlungszwecken eingesetzt wird. Anstelle einer Wärmeabfuhr über eine Flüssigkeit oder über einen Wärmepumpenkreislauf kann Wärme auch zur Raumheizung genutzt werden, indem Luft in der Solarthermieeinheit 3 aufgeheizt wird und als Frischluft zur Raumbelüftung und -heizung verwendet wird.

Die PV-Einheit 2 ist im dargestellten Ausführungsbeispiel als ein Aufsetzrahmen ausgebildet, der auf die Solarthermieeinheit 3 aufgesetzt ist. Es kann vorgesehen sein, die Solaranordnung 1 bereits herstellerseitig als Kombination der Solarthermieeinheit 3 und der PV-Einheit 2 zu montieren. Es ist auch denkbar, die PV-Einheit 2 als Nachrüsteinheit für eine bereits bestehende und auf einem Dach montierte Solarthermieeinheit 3 zu konzipieren.

Die PV-Einheit 2 weist eine Mehrzahl von streifenförmigen PV-Lamellen 20 auf, die sich mit ihrer Längsseite in Querrichtung der PV-Einheit 2 erstrecken und die so nebeneinander und parallel zueinander ausgerichtet sind, dass sich der in Figur 1a gezeigte Betriebszustand eine gleichmäßige, nur durch kleine Spalte zwischen den PV-Lamellen 20 unterbrochene Oberfläche bildet.

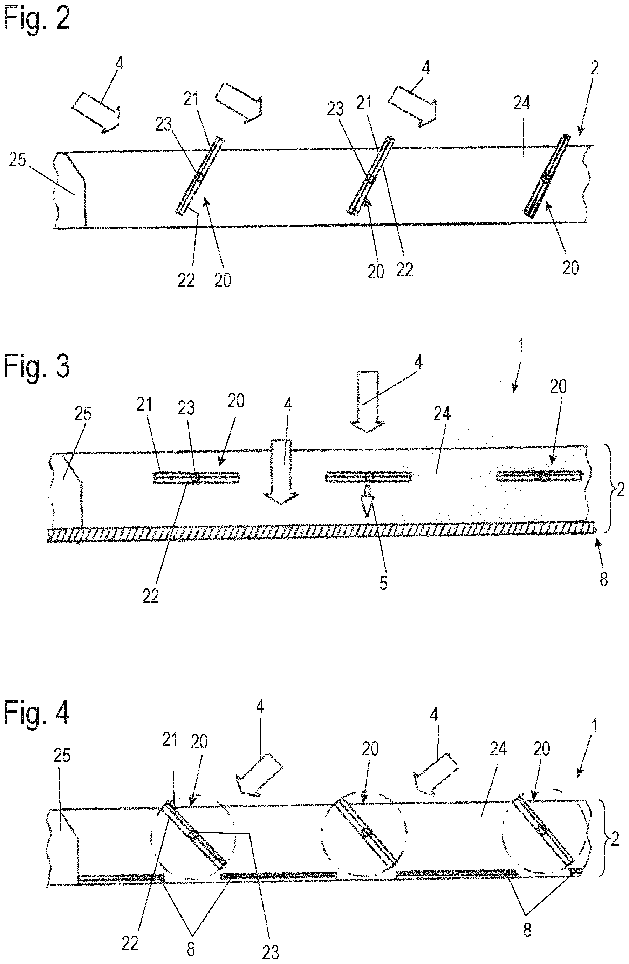

Die PV-Lamellen 20 weisen eine photovoltaisch aktive Oberfläche 21 auf, die im Betriebszustand der Figur 1a auf eine einfallende Strahlung 4 hin ausgerichtet ist. Eine der PV-aktiven Oberseite 21 gegenüberliegende Unterseite 22 ist nicht photovoltaisch aktiv und weist einen hohen Reflexionsgrad auf, indem sie beispielsweise weiß oder spiegelnd reflektierend ist. Es ist auch denkbar, die PV-Lamellen 20 (teil-)durchlässig für Licht auszubilden, insbesondere wenn diese (Teil-) Durchlässigkeit wellenlängenabhängig ist (vgl. auch Ausführungen zu Figur 3).

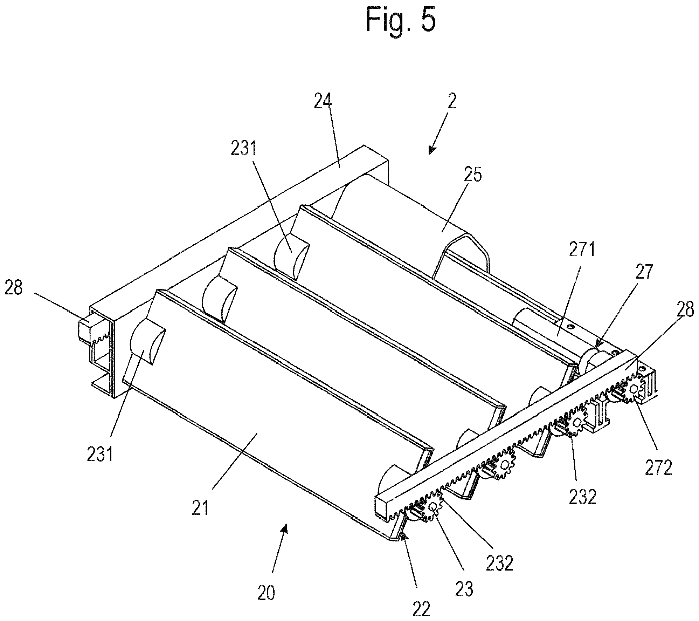

Eine Besonderheit bei der PV-Einheit 2 ist, dass die PV-Lamellen 20 eine Drehachse 23 aufweisen, um die sie schwenkbar gelagert sind. Wie erwähnt ist die PV-Einheit 2 als ein Aufsetzrahmen ausgebildet, der außen von Längsträgern 24 und Querträgern 25 gebildet ist. Die PV-Lamellen 20 sind mit ihren Drehachsen 23 in entsprechenden Lagern der Längsträger 24 gelagert. Dabei ist in der PV-Einheit 2 eine Antriebseinheit vorhanden, die auf die PV-Lamellen 20 wirkt und über die eine Dreh- oder Schwenkstellung der PV-Lamellen 20 eingestellt werden kann. Bevorzugt sind alle PV-Lamellen 20 der PV-Einheit 2 mechanisch so miteinander gekoppelt, dass sie ihre Drehbewegung synchron vornehmen. Dieses kann beispielsweise über einen Zahnstangen- oder Zahnriemenantrieb oder einen Kettenantrieb erfolgen, der im Bereich mindestens eines der beiden Längsträger 24 angeordnet ist und über Zahnräder an den Drehachsen 23 auf die PV-Lamellen 20 wirkt. Ein Antriebsmotor dieses Antriebs kann ebenfalls in den Längsträgern 24 oder in einem oder beiden der Querträger 25 angeordnet sein. Ein detaillierter ausgeführtes Ausführungsbeispiel, in dem auch Details des Antriebs dargestellt sind, ist im Zusammenhang mit den Figuren 5 ff. beschrieben.

Die PV-Lamellen 20 selbst können als Dünnschichtsolarmodule ausgebildet sein, bei denen die die PV-aktive Oberseite 21 bildenden Dünnfilmschichten auf einer Glasplatte oder glasklaren Kunststoffplatte als Träger aufgebracht sind. Dieses Dünnschichtmodul kann unmittelbar die PV-Lamelle 20 bilden, wobei die Drehachse 23 nicht durchgängig über die gesamte Länge der PV-Lamelle 20 als Achse ausgebildet ist, sondern als Achsstummel nur jeweils an den kurzen Querseiten der PV-Lamelle 20 angeordnet ist. Alternativ kann die PV-Lamelle 20 auch ein kristallines oder amorphes PV-Modul sein oder dieses umfassen, das selbsttragend ausgebildet ist oder auf einem Träger angeordnet ist. Eine Kontaktierung der PV-Lamellen 20 kann, wie auch im Zusammenhang mit weiteren Ausführungsbeispielen noch erläutert wird, über die Drehachsen 23 bzw. die Achsstummel erfolgen, so dass jeweils ein Pol der von der PV-Lamelle erzeugten Gleichspannung an je einer Seite der PV-Lamelle 20 bereitgestellt wird.

Die Möglichkeiten, die sich durch das Verschwenken der PV-Lamellen 20 bieten, sind beispielhaft in einem Vergleich der Figuren 1a, b gegenüber 1c und 1d dargestellt.

Bei den Beispielen der Figuren 1a, b bilden die PV-Lamellen 20 eine durchgehende Fläche, wodurch einfallende Strahlung 4 direkt nur auf die PV-Lamellen 20 trifft und nicht auf die Solarthermieeinheit 3. In den Figuren 1a, b ist eine Situation zur Mittagszeit dargestellt, bei der die einfallende Strahlung 4 möglichst senkrecht auf die Solaranordnung 1 fällt. Bei der gezeigten Ausrichtung der PV-Lamellen 20 ist dann ein maximaler Stromertrag gegeben. Die PV-Lamellen 20 können dabei so ausgebildet sein, dass sie die zur Stromerzeugung benötigten kurzwelligeren Anteile der einfallenden Strahlung 4 nutzen, aber für Infrarotstrahlungsanteile durchlässig sind. Entsprechend ist in Figur 1a eine durchtretende Strahlung 5 gezeigt, die auf die Solarthermieeinheit 3 fällt und dort z. B. zur Wassererwärmung eingesetzt werden kann. Auf diese Weise wird durch die Kombination der PV-Einheit 2 und der Solarthermieeinheit 3 ein insgesamt höherer Wirkungsgrad der Ausnutzung der einfallenden Strahlung 4 erzielt.

Zudem ist bei Solarthermieeinheiten zumindest in Perioden länger anhaltender Sonneneinstrahlung, z. B. in Schönwetterperioden in der Sommerzeit oder in Gegenden ohne Jahreszeitenwechsel, in der Regel ein Überangebot an Warmwasser vorhanden, da Warmwasserspeicher in einem Haushalt nur eine begrenzte Aufnahmekapazität haben. Bei einer nicht abgedeckten Solarthermieeinheit kann dieses sogar dazu führen, dass überschüssige Wärme innerhalb des Hauses durch Heizungen abgegeben werden muss, um ein Überhitzen des Flüssigkeitskreislaufs der Solarthermieeinheit zu verhindern.

Der gezeigte kombinierte Einsatz der PV-Einheit 2 und der Solarthermieeinheit 3 ermöglicht es, Sonneneinstrahlung gezielt verstärkt in Strom umzuwandeln und damit gleichzeitig eine übermäßige und gar problematische Bestrahlung der Solarthermieeinheit 3 zu unterbinden. Würde hingegen in der Einstrahlungssituation der Figuren 1a, b eine verstärkte Bestrahlung der Solarthermieeinheit 3 gewünscht, beispielsweise weil Brauchwasser nachgeheizt werden soll, können die PV-Lamellen 20 einfach um 90 Grad gedreht werden, so dass die einfallende Strahlung 4 nahezu vollständig auf die Solarthermieeinheit 3 auftrifft.

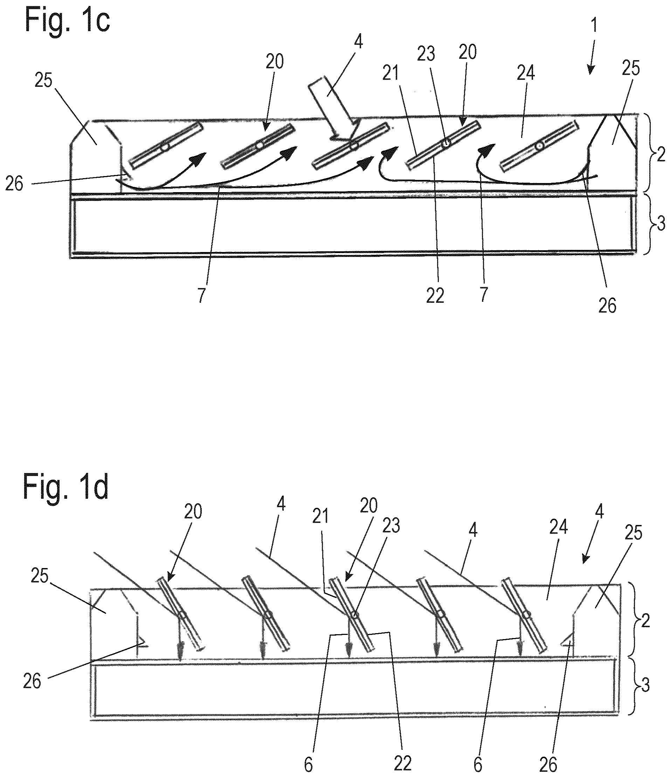

Figur 1c zeigt eine Einstrahlungssituation, wie sie am Morgen oder Abend vorliegt, bei der also die einfallende Strahlung 4 schräg auf die Solaranordnung 1 auftrifft. In diesem Fall kann durch Verdrehen der PV-Lamellen 20 der Stromertrag maximiert werden, indem die PV-aktive Oberfläche 21 wiederum senkrecht zur einfallenden Strahlung ausgerichtet und ggf. nachgeführt wird.

Ein weiterer Betriebszustand ist in der Figur 1d gezeigt. Hier trifft die einfallende Strahlung 4 in einem sehr flachen Winkel auf die Solaranordnung 1 auf. Eine solche Einstrahlungssituation liegt beispielsweise in den frühen Morgen- oder den späten Abendstunden vor. Wenn in einer solchen Einstrahlungssituation ein erhöhter Bedarf an Warmwasser durch die Solarthermieeinheit 3 vorliegt, können die PV-Lamellen 20 so gestellt werden, dass an ihrer PV-aktiven Oberfläche 21 Totalreflexion eintritt, so dass die einfallende Strahlung 4 nahezu verlustfrei als reflektierte Strahlung 6 weitergeleitet wird und auf die Solarthermieeinheit 3 auftrifft.

Zusammenfassend bietet also die Schwenkbarkeit der PV-Lamellen 20 eine große Variabilität und Flexibilität zur effizienten Ausnutzung und situationsbezogenen Verteilung der einfallenden Strahlung auf die PV-Einheit 2 bzw. die Solarthermieeinheit 3.

Bei den Ausführungsbeispielen der Figuren 1a - d ist als ein optionales Merkmal zusätzlich eine Lüftungsvorrichtung vorhanden, die einen Luftstrom 7 in dem Zwischenraum zwischen den PV-Lamellen 20 und der Solarthermieeinheit 3 erzeugen kann. Beim dargestellten Ausführungsbeispiel ist die Lüftungsvorrichtung in den Querträgern 25 angeordnet. Sie umfasst beispielsweise jeweils einen in den Querträgern 25 positionierten Radiallüfter, der zusätzlich mit einer zuschaltbaren Heizeinrichtung ausgestattet sein kann. In den schematischen Zeichnungen der Figuren 1a - d ist von der Lüftungsvorrichtung ein Luftein- oder -austritt 26 zu erkennen.

Der Luftstrom 7 kann in verschiedener Weise eingesetzt werden, um die Effektivität der Solaranordnung 1 zu erhöhen. Bei dem in Figur 1c gezeigten Beispiel wird ein Luftstrom aus dem Luftein- bzw. -austritt 26 durch die Lüftungsvorrichtung generiert, der kühle Umgebungsluft, die außen angesaugt wird, in den Raum zwischen die PV-Lamellen 20 und die Solarthermieeinheit 3 einbringt. Der Luftstrom kühlt insbesondere die PV-Lamellen 20, die dann in einem im Hinblick auf die Effektivität günstigeren Temperaturbereich arbeiten.

Figur 1a zeigt einen anderen Einsatzzweck des Luftstroms 7. In diesem Fall dient der Luftstrom 7, ggf. unter Verwendung der zuschaltbaren Heizeinrichtung, dazu, die PV-Lamellen 20 anzuwärmen, wenn diese beispielsweise im Winter mit Raureif beschlagen oder von einer dünnen Schnee- oder Eisschicht bedeckt sind. Trotz des Einsatzes von Strom zum Betreiben der Lüftungsvorrichtung und der optionalen Heizung kann diese Vorgehensweise energetisch sinnvoll sein, da nach dem Entfernen einer Schnee- oder Reifschicht die einfallende Strahlung 4 von den PV-Lamellen 20 mit deutlich höherer Effektivität in Strom umgewandelt werden kann.

Figur 1b zeigt einen ähnlichen Einsatzfall, wobei die Solarthermieeinheit 3 als Wärmetauscher, insbesondere Kondensator eines Wärmepumpenkreislaufs ausgebildet ist. In dem Fall kann Wärme aus dem Wärmepumpenkreislauf für das Entfrosten der PV-Lamellen 20 genutzt werden. Luft wird dann von der Lüftungsvorrichtung den durch den Wärmetauscher gesaugt und an der Unterseite 22 der PV-Lamellen 20 vorbeigeführt.

In Figur 2 ist in ähnlicher Weise wie in den Figuren 1a - d eine Schnittdarstellung eines weiteren Beispiels einer PV-Einheit 2 gezeigt. Bei dem in Figur 2 gezeigten Beispiel ist eine rein photovoltaische Nutzung vorgesehen. Im Unterschied zu den ersten Ausführungsbeispielen sind die PV-Lamellen 20 hier so weit voneinander beabstandet, dass sie auch bei flacher Ausrichtung die von der Solaranordnung 1 belegte Fläche nicht vollständig bedecken. Damit wird bei senkrechter Einstrahlung 4 die von der PV-Einheit 2 genutzte Fläche nicht maximal ausgenutzt, dafür kann auch bei sehr schrägem Lichteinfall, wie es in der Figur 2 gezeigt ist, eine optimale Ausrichtung der Lamellen 20 in Richtung auf die einfallende Strahlung 4 erfolgen, ohne dass sich die PV-Lamellen 20 gegenseitig abschatten.

Im Hinblick auf die Gesamteffektivität der Anlage über den Tagesverlauf gerechnet ist dieses vorteilhaft, insbesondere, wenn eine geringere Investition der Solaranordnung mitberücksichtigt wird, die sich aus der insgesamt kleineren Fläche der verwendeten PV-Lamellen 20 ergibt. Durch die Möglichkeit der Ausrichtung der PV-Lamellen 20 wird somit ein erzielter Ertrag von der Mittagszeit weg in die Morgen- und Abendstunden verschoben, was im Hinblick auf die Netzstabilität und auch auf die monetären erzielten Effekte positiv ist. Durch verstärkte Nutzung von Solarenergie im Energiemix eines Netzes besteht häufig eine Tendenz eines Stromüberangebots zur Mittagszeit und einer Stromunterversorgung, die dann konventionell nachgeliefert werden muss, in den Tagesrandstunden. Die Nachführmöglichkeit der PV-Lamellen 20 wirkt diesem entgegen.

Besonders vorteilhaft kann die PV-Einheit 2 betrieben werden, wenn die Längsträger 24 in Ost-West-Richtung ausgerichtet sind. Dieses gilt nicht nur für das in Figur 2 gezeigte Beispiel, sondern für alle im Rahmen dieser Anmeldung gezeigten Anordnungen.

Figur 3 zeigt eine in Kombination einer PV-Einheit 2 mit drehbaren PV-Lamellen 20 und PV-Zellen 8 einer bereits bestehenden PV-Anlage. Hierbei werden bevorzugt PV-Lamellen 20 eingesetzt, die einen Teil der einfallenden Strahlung 4 als durchtretende Strahlung 5 auf die weiteren PV-Zellen 8 durchlassen. In der Mittagszeit wird dadurch ein etwas kleinerer Ertrag durch die weiteren PV-Zellen 8 erzielt, der jedoch mehr als kompensiert wird durch die erhöhten Beträge durch die PV-Lamellen 20, insbesondere in den Tagesrandstunden.

Figur 4 zeigt ähnlich wie Figur 3 eine Ausgestaltung einer PV-Einheit 2, bei der schwenkbare PV-Lamellen 20 mit weiteren PV-Zellen 8 kombiniert sind. Hierbei ist die PV-Einheit 2 mit den schwenkbaren PV-Lamellen 20 nicht auf eine vollflächig ausgeführte und ggf. bereits bestehende PV-Anlage aufgesetzt, sondern die PV-Lamellen 20 und die weiteren PV-Zellen 8 sind im Hinblick auf ihre Größe und Anordnungsgeometrie aufeinander abgestimmt. Die weiteren PV-Zellen 8 sind ebenfalls streifenförmig ausgebildet und sind bevorzugt so positioniert, dass einfallende Strahlung 4, die zwischen den PV-Lamellen 20 durchtritt, auf die PV-Zellen 8 trifft.

Auch hierbei wird im Tagesverlauf eine besonders effektive Ausnutzung der einfallenden Strahlung erzielt. Vorteilhaft ist die Unterseite 22 der PV-Lamellen hochreflektierend ausgebildet, ebenso wie der nicht von den streifenförmigen weiteren PV-Zellen 8 belegte Bereich unterhalb der PV-Lamellen 20. In diesem Bereich reflektiertes Licht kann dann von der Unterseite 22 der PV-Lamellen 20 nochmals auf die weiteren PV-Zellen 8 reflektiert und dort in Strom umgesetzt werden, was den Gesamtwirkungsgrad weiter steigert.

In den Figuren 5-7 ist ein weiteres Beispiel einer PV-Einheit 2 in verschiedenen Zeichnungen detaillierter dargestellt. Die PV-Einheit 2 kann eigenständig oder kombiniert mit einer Solarthermieeinheit 3 in einer Solaranordnung 1 vergleichbar mit den zuvor gezeigten Ausführungsbeispielen eingesetzt werden.

In Figur 5 ist zunächst in einer isometrischen Übersichtsdarstellung ein Ausschnitt der PV-Einheit 2 dieses Beispiels gezeigt. Um Einblick in den Aufbau der Anordnung zu erhalten, sind einige Komponenten entfernt bzw. geschnitten dargestellt. Zudem ist die Anordnung in ihrer Längsrichtung gekürzt mit nur drei in Längsrichtung hintereinander angeordneten PV-Lamellen 20 gezeigt. In einer Umsetzung der Anordnung wird üblicherweise eine größere Anzahl von PV-Lamellen 20 in Längsrichtung hintereinander angeordnet sein. Auch die Länge der PV-Lamellen 20 (und damit die Erstreckung der PV-Einheit 2 in der Querrichtung) ist bei dem gezeigten Beispiel vergleichsweise kurz ausgebildet. In einer Umsetzung werden in der Regel die PV-Lamellen 20 verglichen mit ihrer Breite länger ausgebildet sein.

Im Hinblick auf die Vorteile, die die PV-Einheit 2 mit den schwenkbaren PV-Lamellen 20 bietet, wird auf die Ausführungen der vorherigen Beispiele verwiesen. Bei diesem Beispiel steht eine mögliche Realisierung des Schwenkmechanismus im Vordergrund.

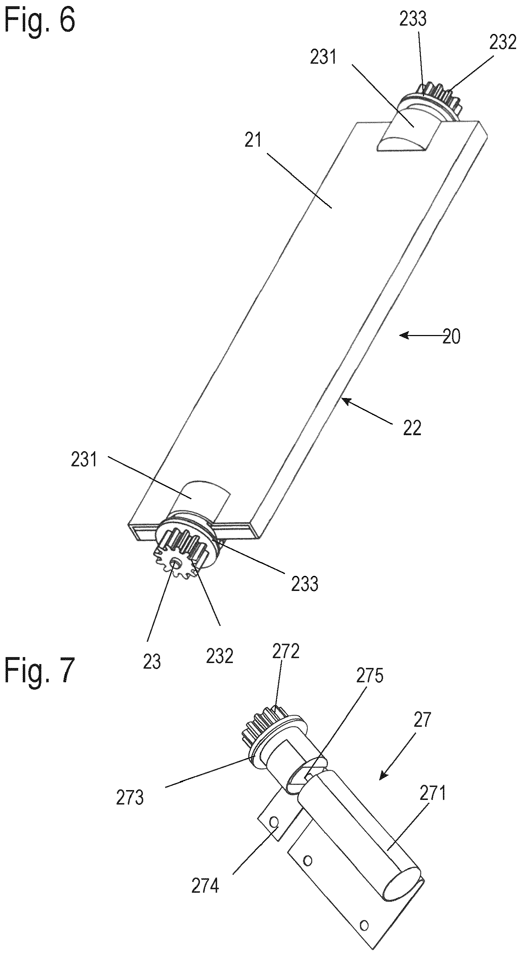

Der Aufbau der PV-Lamellen selbst ist nochmals in Figur 6 gezeigt, die eine PV-Lamelle 20 separat von der PV-Einheit 2 in einer isometrischen Schrägansicht wiedergibt.

Anstelle einer durchgehenden Drehachse 23 sind bei diesem Beispiel kurze Achsträger 231 ausgebildet, die an jeweils einer schmalen Querseite der PV-Lamelle 20 montiert sind. Im gezeigten Beispiel übergreifen die Achsträger 231 dabei die PV-aktive Oberseite 21 und die Unterseite 22 abschnittsweise und sind beispielsweise in diesem Abschnitt mit der Zellanordnung der PV-Lamelle 20 mechanisch und auch elektrisch verbunden. An jedem Achsträger sind ein Zahnrad 232 sowie eine Dichtung 233 angeordnet. Aus dem Zahnrad 232 tritt mittig die eigentlich Drehachse 23 in Form eines kurzen Achsstummels hervor.

Die PV-Lamellen 20 sind in den Längsträgern 24 gelagert, die vorliegend aus einem Hohlkammerprofil bestehen. Zur Innenseite hin sind Bohrungen in dem Längsträger 24 ausgebildet, durch die die PV-Lamellen 20 mit ihrem Zahnrad 232 eingesteckt ist. Die Bohrung wird durch die Dichtung 233 abgedichtet. Auf der der Bohrung gegenüberliegenden Außenseite der Längsträger 24 ist konzentrisch mit der erstgenannten Bohrung eine weitere Bohrung eingebracht, in der die Drehachse 23 gelagert ist. Diese Bohrung kann als Sackbohrung von der Innenseite des Längsträgers 24 ausgebildet sein, so dass der Längsträger 24 nach außen hin keine Öffnung aufweist, durch die Wasser in die Hohlkammer eintreten könnte.

In zumindest einem der Querträger 25 (Figur 5 zeigt nur diesen einen Querträger 25) ist eine Antriebseinheit 27 angeordnet, die detaillierter in einer isometrischen Ansicht auch nochmals separat in Figur 7 wiedergegeben ist. Die Antriebseinheit 27 weist einen Antriebsmotor 271 mit Getriebe sowie einem Abtriebszahnrad 272 auf, das in vergleichbarer Art und Weise wie die Zahnräder 232 der PV-Lamellen 20 in den Längsträger 24 hineinragt. Ähnlich wie bei den PV-Lamellen 20 ist dem Abtriebszahnrad 272 eine Dichtung 273 zugeordnet, um die Durchführung des Abtriebszahnrads 272 in dem Längsträger 24 abzudichten. In zumindest einem Längsträger 24, bevorzugt in beiden Längsträgern 24, ist (jeweils) eine Zahnstange 28 angeordnet, die mit allen Zahnrädern, den Zahnrädern 232 und dem Abtriebszahnrad 272 der Antriebseinheit 27 kämmt. Auf diese Weise wird eine Drehbewegung des Abtriebszahnrads 272 synchron auf alle PV-Lamellen 20 übertragen.

In dem dargestellten Beispiel sind Zahnstangen 28 an beiden Enden der PV-Lamellen 20, also in beiden Längsträgern 24 vorgesehen. Dabei können auch zwei Antriebseinheiten 27 mit jeweils einem Abtriebszahnrad 272 in einen oder beiden der Querträger 25 vorhanden sein, die auf jeweils eine Zahnstange 28 wirken. Die Antriebseinheiten 27 werden in einem solchen Fall bevorzugt synchron angesteuert oder gar im Hinblick auf ihre Drehzahl synchronisiert betrieben. Es ist auch möglich, eine Antriebseinheit 27 mechanisch mit zwei Abtriebszahnrädern 272 zu koppeln, beispielsweise über eine entsprechend sich entlang des gesamten Querträgers 25 erstreckende Achse (ggf. mit elektrischen Isolierabschnitten, s. u.).

Bei dem dargestellten Beispiel dienen die Zahnräder 232 und die Zahnstange 28 nicht nur der mechanischen Kopplung der PV-Lamellen 20 mit der Antriebseinheit 27, sondern auch der Stromableitung. Wie zuvor erwähnt, stehen an den PV-Lamellen 20 die Zahnräder 232 in elektrischem Kontakt mit den PV-Zellen der PV-Lamellen 20, wobei jeder Seite (und damit jeweils einem der beiden Zahnräder 232 einer PV-Lamelle 20) ein Pol zugeordnet ist. Der von den PV-Lamellen 20 erzeugte Strom wird über die Zahnräder 232 auf die jeweilige Zahnstange 28 übertragen. In dem Sinne wirken die Zahnstangen 28 als Stromsammelschienen der auf diese Weise parallel geschalteten PV-Lamellen 20. Dieses Prinzip kann vergleichbar auch bei Nutzung einer elektrisch leitenden Kette anstelle der Zahnstange 28 umgesetzt sein. Bei einer derartigen Stromableitung sind die Längsträger 24 bevorzugt aus einem elektrisch isolierenden Material gefertigt, z.B. aus Kunststoff wie Polyester oder Polycarbonat. Sie sind bevorzugt 2-teilig ausgebildet, wobei eine Lagerung der PV-Lamellen 20 in halboffenen, aufeinanderliegenden Lageraussparungen montagefreundlich erfolgt. Die Längsträger 24 bzw. ihre beiden Teile können in einem Spritzgussverfahren, durch Extrudieren oder Pressen gefertigt sein.

Mit den Zahnstangen 28 kann ein flexibles Kabel verbunden sein, das den gesammelten Strom weiterleitet. Da die Schiebebewegung der Zahnstangen 28 im Bereich von maximal einigen Zentimetern (cm) liegt, kann eine Übertragung auf ein flexibles Kabel ohne Schleifkontakte o.ä. erfolgen. Alternativ kann, wie das im dargestellten Beispiel umgesetzt ist, eine Stromabnahme über das Abtriebszahnrad 272 und die Antriebseinheit 27 erfolgen. Dazu ist, wie in Figur 7 zu sehen ist, ein Stromabnehmer 274 elektrisch mit dem Abtriebszahnrad 272 verbunden. Zu einem Antriebsmotor 271 hin ist eine isolierende Kupplung 275 vorhanden, um den Antriebsmotor 271 und die stromtragenden Komponenten der Antriebseinheit 27 elektrisch gegeneinander zu isolieren. Als weitere Alternative ist auch eine kabelgebundene Übertragung von jeder PV-Lamelle 20 auf eine Stromsammelschiene möglich.

Ein besonderer Vorteil der Übertragung der mechanischen Bewegung und ggf. auch der Stromabfuhr über die Zahnstange 28 ist die leichte Größenskalierbarkeit der PV-Einheit 2. Sowohl das Profil des Längsträgers 24, als auch die Zahnstange 28 können als Strang-Pressmaterial in großen Längen gefertigt werden und nach Bedarf beliebig abgelängt werden, um die PV-Einheit 2 im Hinblick auf ihre Länge und damit die Anzahl der PV-Lamellen 20 flexibel herstellen zu können, ohne dass eine große Zahl unterschiedlich dimensionierter Komponenten vorgehalten werden muss.

Bei Kombination der PV-Einheit 2 mit einer Solarthermieeinheit 3 können üblicherweise vorhandene und in der Regel wärmeisolierte Anschlussrohre, z.B. Kupferrohre, an die die Solarthermieeinheit 3 angeschlossen ist, vorteilhaft zur Übertragung von Strom, den die PV-Einheit 2 erzeugt, z.B. zu einem Wechselrichter genutzt werden. Dazu können isolierende Anschlussmuffen zwischen den Anschlussrohren und der Solarthermieeinheit 3 verwendet werden, um die Solarthermieeinheit 3 elektrisch von den Anschlussrohren abzukoppeln. Aus Sicherheitsgründen sollte die von der PV-Einheit 2 bereitgestellte Spannung dabei kleiner als 60 Volt sein. Alternativ oder zusätzlich können die Anschlussrohre zur Übertragung von Steuersignalen zum Steuern der PV-Einheit 2 dienen.

In einer möglichen vorteilhaften Weiterbildung der in den zuvor beschriebenen Beispielen gezeigten PV-Einheiten 2 kann die PV-aktive Oberfläche 21 der PV-Lamellen 20 eine Antireflexionsstruktur aufweisen. Diese kann im Produktionsprozess der PV-Lamellen 20 bzw. der sie bildenden PV-Zellen bereits ausgebildet oder aufgebracht werden. Alternativ kann auch nachträglich eine Antireflexionsfolie mit einer Antireflexionsstruktur auf die PV-Lamellen 20 aufgezogen werden.

Durch die Antireflexionsstruktur kann die Fähigkeit, Einstrahlung auch in den Tagesrandstunden und bei diffusem Licht effektiv in Strom umzusetzen, zusätzlich zur Verschwenkbarkeit der PV-Lamellen 20 erhöht werden.

Bevorzugt weist die Antireflexionsstruktur eine Oberfläche auf, die in nur einer Raumrichtung periodisch strukturiert ist. Die Oberfläche weist also entsprechend eine Linienstruktur auf, die für einen Lichteinfallwinkel, der senkrecht zu den strukturierten Linien verläuft, mit dem gleichen positiven Antireflexions-Effekt verbunden ist, wie bei einer Strukturierung in zwei orthogonal zueinander verlaufende Oberflächenrichtungen.

Verfahrenstechnisch kann die Linienstrukturierung jedoch viel einfacher hergestellt werden, insbesondere wenn Kunststoff als Trägermaterial eingesetzt wird. Ein geeignetes Herstellungsverfahren kann z.B. ein Einprägen der Linienstruktur in ein Kunststoffmaterial umfassen. Alternativ kann Kunststoff mit der Strukturierung auch extrudiert oder in einem Spritzgussverfahren hergestellt werden.

Bevorzugt wird die Antireflexionsstruktur so auf den PV-Lamellen 20 angeordnet, dass die Linien der Struktur parallel zur Längsrichtung der PV-Lamellen 20 verlaufen. Eine Variation der Lichteinfallrichtung ist in der Praxis bei Solarabsorbern maßgeblich nur entlang einer Richtung gegeben, nämlich entlang der Ost-West-Richtung bedingt durch den täglichen Sonnenverlauf. Bei entsprechender Ausrichtung der PV-Lamellen 20 quer zur Ost-West-Richtung wird durch die Nachführbarkeit der PV-Lamellen 20 und die Antireflexionsstruktur eine Verminderung der Reflexion im Hinblick auf die Variation der Lichteinfallsrichtung im Tagesverlauf erreicht. Eine Variation der Einstrahlungsrichtung in einer dazu orthogonal stehenden Richtung ist durch eine Veränderung des Sonnenstands im Jahresverlauf zwar gegeben, diese Änderung ist jedoch kleiner als die, die sich in Ost-West-Richtung im Tagesverlauf ergibt.

In einer vorteilhaften Ausgestaltung kann das Trägermaterial der Antireflexionsstruktur eine Kunststofffolie sein, deren Dicke bevorzugt zwischen etwa 0,03 und 0,2 mm liegt. Die Kunststofffolie kann einseitig selbstklebend sein, z.B. indem sie mit einer entsprechenden Adhäsionsschicht versehen ist. Auf diese Weise kann die Antireflexionsstruktur leicht auf die PV-Lamellen 20 aufgebracht werden, ggf. auch nachträglich, wenn die PV-Einheit 2 bereits installiert ist.

In einer Ausbildung als Folie ergibt sich als zusätzlicher Vorteil die Möglichkeit, die Folie auf eine nicht ebene PV-Lamelle 20 aufzubringen. Die Oberfläche der PV-Lamelle 20 kann z.B. in sich ebenfalls linien- bzw. wellenförmig strukturiert sein, wobei die Periodenlänge und die Wellenhöhe dann eher im Bereich einiger Millimeter bis Zentimeter liegen. Das erhöht zum einen die mechanische Stabilität, was eine ausreichend stabile Herstellung in Leichtbauweise ermöglicht. Zum anderen wird bei gleicher Grundfläche die mit photovoltaisch aktivem Material belegte Fläche größer, was zu Ertragssteigerungen führen kann.

Weiter vorteilhaft kann eine Periodenlänge der periodischen Struktur der Antireflexionsstruktur im Bereich von einigen hundert Nanometern bis hin zu Mikrometern liegen. Strukturen mit charakteristischen Längen im Bereich der Wellenlänge des Sonnenlichts wirken besonders reflexionsvermindernd.

Zudem tritt eine Selbstreinigungseffekt, auch Lotuseffekt genannt, auf, der eine Verschmutzung der Oberfläche der Antireflexionsstruktur verhindert oder zumindest verringert. Da eine Verschmutzung mit einer unerwünschten Absorption oder Reflexion des Sonnenlichts einhergeht, senkt eine Verschmutzung die Effizienz der PV-Lamellen 20. Umgekehrt wird so durch den Selbstreinigungseffekt die Effizienz gesteigert.

Weiter vorteilhaft ist die periodische Struktur der Antireflexionsstruktur sinusförmig. Bevorzugt liegt eine Höhenvariation der periodischen Struktur im Bereich von einigen hundert Nanometern bis hin zu Mikrometern.

### Bezugszeichenliste

- 1: Solaranordnung
- 2: PV-Einheit
- 3: Solarthermieeinheit
- 4: einfallende Strahlung
- 5: durchtretende Strahlung
- 6: reflektierte Strahlung
- 7: Luftstrom
- 8: PV-Zellen

- 20: PV-Lamelle
- 21: PV-aktive Oberseite
- 22: Unterseite
- 23: Drehachse
- 231: Achsträger
- 232: Zahnrad
- 233: Dichtung
- 24: Längsträger
- 25: Querträger
- 26: Luftaustritt
- 27: Antriebseinheit
- 271: Antriebsmotor
- 272: Zahnrad
- 273: Dichtung
- 274: Stromabnehmer
- 275: Isolierkupplung
- 28: Zahnstange

## Patentansprüche

1. Solaranordnung (1) mit einer Photovoltaikeinheit (2) mit Photovoltaikzellen, deren Ausrichtung mit Hilfe einer Verstellvorrichtung verstellbar ist, wobei die Photovoltaikeinheit (2) eine Mehrzahl von Photovoltaiklamellen (20) aufweist, die parallel zueinander angeordnet und schwenkbar gelagert sind, **dadurch gekennzeichnet, dass**
die Photovoltaikeinheit (2) parallel zu und über einer Solareinheit angeordnet ist.

2. Solaranordnung (1) nach Anspruch 1, wobei die Solareinheit weitere PV-Zellen (8) aufweist.

3. Solaranordnung (1) nach Anspruch 1 oder 2, wobei die Solareinheit eine Solarthermieeinheit (3) umfasst.

4. Solaranordnung (1) nach Anspruch 3, wobei die Solarthermieeinheit (3) einen Verdampfer und/oder einen Kondensator aufweist.

5. Solaranordnung (1) nach Anspruch 3 oder 4, wobei Anschlussrohre der Solarthermieeinheit (3) zur Ableitung eines von der Photovoltaikeinheit (2) erzeugten Stroms und/oder zur Übertragung von Steuersignalen dienen.

6. Solaranordnung (1) nach einem der Ansprüche 1 bis 5, aufweisend einen Rahmen, der aus mindestens zwei Längsträgern (24) und mindestens zwei Querträgern (25) gebildet ist, wobei die Photovoltaiklamellen (20) in den Längsträgern (24) schwenkbar gelagert sind.

7. Solaranordnung (1) nach Anspruch 6, bei der an den Drehachsen (23) Zahnräder (232) angeordnet sind, über die die Photovoltaiklamellen (20) verschwenkt werden, wobei die Zahnräder (232) in eine Hohlkammer eintauchen, die in dem mindestens einen Längsträger (24) ausgebildet ist, und wobei in der Hohlkammer des mindestens einen Längsträgers (24) eine Zahnstange (28) verläuft, in die die Zahnräder (232) eingreifen.

8. Solaranordnung (1) nach Anspruch 7, aufweisend zwei Längsträger (24) mit jeweils einer Hohlkammer, wobei Zahnräder (232) an beiden kurzen Querseiten einer Photovoltaiklamellen (20) angeordnet sind und wobei in beiden Hohlkammern jeweils eine Zahnstange (28) angeordnet ist, die mit den jeweiligen Zahnrädern (232) auf der entsprechenden Seite zusammenwirkt.

9. Solaranordnung (1) nach Anspruch 8, bei der die Photovoltaiklamellen (20) über die Zahnräder (232) und die jeweilige Zahnstange (28) elektrisch kontaktiert sind.

10. Solaranordnung (1) nach Anspruch 8 und 9, bei der die Zahnstangen (28) über die Abtriebszahnräder (272) und Stromabnehmer (274) mit Stromleitungen zur Kontaktierung der Photovoltaikeinheit (2) verbunden sind.

11. Solaranordnung (1) nach einem der Ansprüche 7 bis 10, bei der die Längsträger (24) und/oder die Querträger (25) aus Kunststoff gefertigt sind.

12. Solaranordnung (1) nach einem der Ansprüche 1 bis 11, bei der die PV-Lamellen (20) Dünnschicht-Solarmodule aufweisen.

13. Solaranordnung (1) nach Anspruch 12, bei der die PV-Lamellen (20) bis auf einen Anschlussbereich von den Dünnschicht-Solarmodulen gebildet sind.

14. Solaranordnung (1) nach einem der Ansprüche 1 bis 13, bei der eine photovoltaisch aktive Oberfläche (21) der PV-Lamellen (20) mit einer Antireflexionsstruktur versehen ist.

15. Solaranordnung (1) nach einem der Ansprüche 1 bis 14, bei der eine Lüftungsvorrichtung vorhanden ist, um die PV-Lamellen (20) einem Luftstrom auszusetzen.
